# EUROPÄISCHE PATENTSCHRIFT

(11) **EP 3 688 538 B1**
(45) Veröffentlichungstag und Bekanntmachung des Hinweises auf die Patenterteilung: **13.11.2024**
(21) Anmeldenummer: 18782659.9
(22) Anmeldetag: 24.09.2018
(51) Int. Cl.: G05D 1/00, G08G 1/01, G08G 1/16, G08G 1/00

(54) **VERFAHREN UND SYSTEM ZUM AKTUALISIEREN EINES STEUERUNGSMODELLS FÜR EINE AUTOMATISCHE STEUERUNG ZUMINDEST EINER MOBILEN EINHEIT**
METHOD AND SYSTEM FOR UPDATING A CONTROL MODEL FOR AN AUTOMATIC CONTROL OF AT LEAST ONE MOBILE UNIT
PROCÉDÉ ET SYSTÈME DE MISE À JOUR D'UN MODÈLE DE COMMANDE POUR UNE COMMANDE AUTOMATIQUE D'AU MOINS UNE UNITÉ MOBILE

(30) Priorität: 29.09.2017 DE 102017217444
(43) Veröffentlichungstag der Anmeldung: 05.08.2020
(73) Patentinhaber: Volkswagen Aktiengesellschaft, 38440 Wolfsburg (DE)
(72) Erfinder: HÜGER, Fabian, 38302 Wolfenbüttel (DE); SCHLICHT, Peter, 38442 Wolfsburg (DE)
(86) Internationale Anmeldenummer: PCT/EP2018/075821
(87) Internationale Veröffentlichungsnummer: WO 2019/063491

(56) Entgegenhaltungen:
- EP-A1- 0 813 479
- EP-A1- 3 219 564
- DE-A1- 102015 213 594
- DE-A1- 102016 007 568
- US-A1- 2010 063 626
- US-A1- 2015 244 826
- US-A1- 2017 011 561
- US-A1- 2017 135 621
- US-A1- 2017 174 221

## Beschreibung

Die vorliegende Erfindung betrifft ein Verfahren zum Aktualisieren eines Steuerungsmodells für eine automatische Steuerung zumindest einer mobilen Einheit. Die Erfindung betrifft ferner ein System zum Aktualisieren eines Steuerungsmodells für eine automatische Steuerung zumindest einer mobilen Einheit.

Aufgrund der Vielfalt und Komplexität der beim Betrieb eines automatisch gesteuerten Fahrzeugs auftretenden Fahrsituationen und Umgebungen ist die Bewältigung der Fahraufgabe für das automatische System nicht stets mit der gleichen Güte möglich. Je nach Situation können beispielsweise Einschränkungen beim Komfort für die Insassen eines Fahrzeugs auftreten oder eine Strecke kann nicht in der optimalen Zeit befahren werden.

Die US 2017/135621 A1 beschreibt die Erfassung von Trainingsdaten für autonomes Fahren sowie das Trainieren eines Modells anhand der erfassten Trainingsdaten. Die EP 3 219 564 A1 beschreibt ein auf maschinellem Lernen basierendes Fahrassistenzsystem. In US 2017/174221 A1 wird die Analyse von Fahrcharakteristiken anhand von maschinellem Lernen beschrieben und in US 2010/063626 A1 die Identifikation einer Umgebung eines Fahrzeuges anhand einer Wissensdatenbank. Die US 2015/244826 A1 beschreibt die Priorisierung von erfassten Sensordaten eines autonomen Fahrzeuges.

In der DE 10 2014 212 898 A1 wird ein Verfahren zum automatisierten Führen eines Ego-Fahrzeugs vorgeschlagen, bei dem eine Notfall-Trajektorie zur Vermeidung einer Kollision unter anderem anhand von solchen Daten erzeugt wird, die mittels Car2Car-Kommunikation erfasst werden.

Die EP 2 164 059 A1 beschreibt ein Verfahren zum Kontrollieren einer Verkehrssituation, bei dem zwischen mehreren an der Verkehrssituation beteiligten Fahrzeugen Sensordaten ausgetauscht werden. Die Trajektorien der Fahrzeuge werden dann anhand dieser Daten geregelt.

Es sind ferner Verfahren bekannt, bei denen Testfahrer mit speziell ausgerüsteten Fahrzeugen gezielt Fahrten in problematischen Situationen durchführen. Die dabei erfassten Daten werden verwendet, um die Systeme für die automatische Fahrt zu verbessern. Dies ist jedoch mit hohen Kosten und großem Zeitaufwand verbunden, wenn eine möglichst große Zahl von einzelnen Situationen erfasst werden soll.

Der vorliegenden Erfindung liegt die Aufgabe zugrunde, ein Verfahren und ein System der eingangs genannten Art bereitzustellen, bei denen die automatische Fahrt einer mobilen Einheit besonders effizient und umfassend optimiert werden kann.

Erfindungsgemäß wird diese Aufgabe durch ein Verfahren mit den Merkmalen des Anspruchs 1 und ein System mit den Merkmalen des Anspruchs 10 gelöst. Vorteilhafte Ausgestaltungen und Weiterbildungen ergeben sich aus den abhängigen Ansprüchen.

Bei dem erfindungsgemäßen Verfahren der eingangs genannten Art erzeugt eine zentrale Steuerungseinheit einen Erfassungsauftrag und überträgt diesen an die mobile Einheit. Dabei umfasst die mobile Einheit Sensoren und der Erfassungsauftrag umfasst Bedingungen für die Erfassung von Sensordatensätzen mittels der Sensoren. Die mobile Einheit erfasst mittels der Sensordaten anhand des Erfassungsauftrags die Sensordatensätze, erzeugt anhand der erfassten Sensordatensätze Übertragungsdaten und überträgt die Übertragungsdaten an die zentrale Steuerungseinheit. Die zentrale Steuerungseinheit empfängt die Übertragungsdaten und erzeugt anhand der empfangenen Übertragungsdaten ein aktualisiertes Steuerungsmodell zur automatischen Steuerung der mobilen Einheit, wobei in einer explorativen Lernphase eine Vielzahl von Kandidaten für Trajektorien zur automatischen Steuerung der mobilen Einheit erzeugt wird, und eine als sicher befahrbare und nicht präferiert bestimmte Trajektorie befahren wird, wobei die nicht präferierte Trajektorie anhand der bei der Ausführung erfassten Sensordatensätzen neu bewertet wird, die auf diese Weise erzeugten neuen Bewertungsergebnisse an die zentrale Steuerungseinheit übertragen werden und das Steuerungsmodell zur automatischen Fahrtplanung optimiert wird.

Dadurch kann vorteilhafterweise eine besonders gezielte Sammlung von Daten erfolgen und eine Optimierung des Steuerungsmodells kann schneller und effizienter als bei den bekannten Verfahren durchgeführt werden.

Das Verfahren wird insbesondere in verschiedenen Phasen ausgeführt. So kann in einer ersten Phase ein Optimierungsbedarf identifiziert werden. In einer weiteren Phase kann ein kooperativer Erfassungs- und Lernauftrag ermittelt und an teilnehmende mobile Einheiten übertragen werden. In einer weiteren Phase erfolgt ein kooperatives Explorieren, Messen und Lernen durch die mobilen Einheiten beziehungsweise anhand von Daten, die durch diese Einheiten erfasst wurden. In einer weiteren Phase kann eine Übermittlung der Ergebnisse an die mobilen Einheiten und die Aktivierung einer optimierten Funktionalität erfolgen.

Ein Steuerungsmodell im Sinne der Erfindung bezeichnet eine Einheit eines Steuerungssystems, das zur automatischen Steuerung einer mobilen Einheit verwendet wird. Das Steuerungsmodell dient dabei der Beurteilung von Informationen über die aktuelle Fahrsituation der mobilen Einheit, wobei insbesondere Sensordaten ausgewertet werden, und dem Treffen einer Entscheidung über eine Reaktion der mobilen Einheit beziehungsweise der Bestimmung von Parametern für eine automatische Fahrfunktion. Insbesondere ist vorgesehen, dass die automatische Steuerung mittels Modulen erfolgt, die bestimmte Einrichtungen der mobilen Einheit ansteuern, wobei den Modulen jeweils ein Steuerungsmodell zugeordnet ist. Beispielsweise kann ein Steuerungsmodell zur Verwendung mit einem neuronalen Netz oder einem Maschinenlernverfahren vorgesehen sein.

Die mobile Einheit ist insbesondere ein Kraftfahrzeug. Bei dem Verfahren kann eine Vielzahl mobiler Einheiten, insbesondere Kraftfahrzeugen, vorgesehen sein, die beispielsweise als eine zusammengehörige Flotte von Fahrzeugen organisiert sein können.

Insbesondere ist die zentrale Steuerungseinheit von einem externen Server umfasst. Die zentrale Steuerungseinheit kann ferner eine andere fahrzeugexterne Einrichtung sein und beispielsweise von einem verteilten Rechnersystem umfasst sein. Die zentrale Steuerungseinheit kann eine Schnittstelle aufweisen, über die eine Datenübertragung mit der mobilen Einheit beziehungsweise der Vielzahl von mobilen Einheiten erfolgen kann.

Die Übertragung von Daten zwischen der mobilen Einheit und der zentralen Steuerungseinheit kann auf an sich bekannte Weise mittels einer datentechnischen Verbindung zwischen der mobilen Einheit und der zentralen Steuerungseinheit erfolgen, insbesondere drahtlos. Beispielsweise kann die Verbindung durch ein lokales Netzwerk oder ein größeres Netzwerk hergestellt werden, beispielsweise das Internet. Ferner kann die Verbindung über ein Telekommunikationsnetz, etwa ein Mobilfunknetz, oder ein drahtloses lokales Netzwerk (etwa WLAN) hergestellt werden. Ferner kann die Datenverbindung durch den Anschluss eines Datenkabels erfolgen. Die Verbindung kann auch über eine andere Einheit hergestellt werden, die selbst eine Verbindung zu der zentralen Steuerungseinheit herstellen kann. Beispielsweise kann eine datentechnische Verbindung zwischen der mobilen Einheit und einem mit dem Internet verbundenen Mobiltelefon bestehen, etwa durch ein Datenkabel oder eine Funkverbindung, beispielsweise per Bluetooth. Insbesondere kann die Verbindung über das Internet hergestellt werden.

Bei dem Verfahren wird ein Erfassungsauftrag von der zentralen Steuerungseinheit an die mobile Einheit übertragen. Dieser umfasst Bedingungen für die Erfassung von Daten mittels Sensoren der mobilen Einheit. Durch diese Bedingungen wird beispielsweise definiert, in welchen Fahrsituationen welche Arten von Sensordaten erfasst werden sollen. Das heißt, die erfassten Sensordatensätze können anhand der Bedingungen des Erfassungsauftrags gebildet werden. Dies bedeutet nicht zwangsläufig, dass die Sensoren der mobilen Einheit nur dann Sensordaten erfassen, wenn die Bedingungen des Erfassungsauftrags erfüllt sind. Vielmehr kann auch eine fortlaufende Erfassung vorgesehen sein, wobei anhand des Erfassungsauftrag, insbesondere anhand der davon umfassten Bedingungen, die zu erfassenden Daten ausgewählt werden. Beispielsweise können die erfassten Sensordaten in einem Ringspeicher abgelegt werden, der anschließend anhand des Erfassungsauftrags mit den Bedingungen analysiert werden kann, um die relevanten Sensordatensätze zu erzeugen.

Die anhand der Sensordatensätze erzeugten Übertragungsdaten können auf verschiedene Weisen gebildet werden und beispielsweise die Daten der Sensordatensätze umfassen. Die Sensordatensätze können ferner verarbeitet werden, etwa um personenbezogene Daten zu anonymisieren oder um einen Verfahrensschritt zur Erzeugung eines vorläufig aktualisierten Steuerungsmodells bereits an dieser Stelle durchzuführen, etwa um die zentrale Steuerungseinheit zu entlasten oder um ihr die weitere Verarbeitung der von der mobilen Einheit bereitgestellten Übertragungsdaten zu ermöglichen.

Die Übertragungsdaten können auf an sich bekannte Weise an die zentrale Steuerungseinheit übertragen werden. Insbesondere kann vorgesehen sein, dass eine datentechnische Verbindung zwischen der mobilen Einheit und der zentralen Steuerungseinheit zu bestimmten Zeitpunkten hergestellt wird, etwa nach Abschluss einer Fahrt, insbesondere um eine Übertragung von Übertragungsdaten und/oder eines Erfassungsauftrags durchzuführen. Ferner kann eine in periodischen Abständen hergestellte oder eine kontinuierliche datentechnische Verbindung vorgesehen sein.

Das aktualisierte Steuerungsmodell wird ebenfalls auf an sich bekannte Weise anhand der Übertragungsdaten erzeugt, insbesondere mittels eines Maschinenlernverfahrens. Es basiert insbesondere auf einer früheren Version des Steuerungsmodells, beispielsweise dem von einem Modul der mobilen Einheit verwendeten oder einem anderen Steuerungsmodell. Ferner kann das aktualisierte Steuerungsmodell auf anderen Modellen basieren oder anhand der Übertragungsdaten vollständig neu erstellt werden.

Das erfindungsgemäße Verfahren kann so implementiert werden, dass ein kooperatives Lernen möglich ist, um problematische Situationen der automatischen Fahrt zu erkennen und insbesondere kooperativ mit anderen Fahrzeugen Strategien und Daten erzeugen, um ihre Fahrfunktionen basierend auf diesem Wissen zu optimieren. Durch die Verwendung einer zentralen Steuerungseinheit können viele Fahrzeuge einer Fahrzeugflotte für die Erfassung von Daten genutzt werden. Die dabei anfallenden, potentiell sehr großen Datenmengen können durch die gezielte Anforderung von bestimmten Sensordaten in bestimmten Situationen zielgerichteter erfasst und im Gesamtvolumen reduziert werden.

Die bei jeder Fahrt eines Fahrzeugs einer Flotte leicht unterschiedlichen Verhältnisse, beispielsweise abhängig von der aktuellen Witterung, Tageszeit und genaue Position eines Fahrzeugs, erlauben die umfassende Erfassung von Daten unter unterschiedlichen Bedingungen. Datengetriebene autonome Fahrfunktionen können auf diese Weise besonders umfassend optimiert werden.

Bei einer Ausbildung des erfindungsgemäßen Verfahrens wird von der zentralen Steuerungseinheit eine Bedarfsmeldung empfangen und der Erfassungsauftrag wird anhand der Bedarfsmeldung erzeugt. Zur Erzeugung des aktualisierten Steuerungsmodells kann dadurch vorteilhafterweise auf erkannte Schwächen des bestehenden Systems reagiert werden.

Die Bedarfsmeldung kann bei der Erfindung beispielsweise eine Information über eine Funktionsweise des Steuerungsmodells umfassen, insbesondere eine Bewertung der Funktion einer automatischen Fahrfunktion, die beispielsweise durch ein Modul zur automatischen Steuerung mittels eines Steuerungsmodells gesteuert wird. So kann etwa erkannt werden, ob die automatische Steuerung nicht optimal funktioniert. Die Bedarfsmeldung umfasst ferner eine Information über einen Kontext, in dem die nicht-optimale Funktionsweise auftritt. Insbesondere wird ermittelt, in welchen Situationen und/oder an welchen Orten eine Schwäche auftritt. Eine identifizierte Schwäche kann sich etwa auf einen Ort, eine Klasse von Orten, eine Situation oder eine Klasse von Situationen beziehen. Das erfindungsgemäße Verfahren ermöglicht es nunmehr, mit den so ermittelten Schwächen umzugehen und dabei die zur Verfügung stehenden Ressourcen möglichst effizient zu nutzen.

Eine nicht optimale Funktionsweise kann durch unterschiedliche Faktoren bedingt sein, wobei insbesondere ein Analyseschritt vorgesehen sein kann, bei dem bestimmt wird, welches Steuerungsmodell zur Steuerung der betroffenen automatischen Fahrfunktion für eine nicht-optimale Funktionsweise verantwortlich ist.

Die von der Bedarfsmeldung umfassten Informationen über den Kontext, in dem die nicht-optimale Fahrweise aufgetreten ist, können beispielsweise eine Position, eine Verkehrssituation oder einen Zustand der mobilen Einheit betreffen. So können etwa Informationen umfasst sein über die befahrene Verkehrsinfrastruktur, etwa den Typ einer Straße, Straßenverläufe, Kreuzungen, Einmündungen oder Ampeln und Vorfahrtsregelungen, über ein durchgeführtes Fahrmanöver, etwa ein Überholvorgang oder ein Abbiegen, über einen Betriebszustand der mobilen Einheit, etwa eine Betriebstemperatur, eine Geschwindigkeit oder Beschleunigung, oder über klimatische Bedingungen, etwa Niederschlag, Nebel, Nacht, Dämmerung oder starke Sonneneinstrahlung.

Die Identifizierung einer Schwäche beziehungsweise einer nicht-optimalen Funktionsweise einer automatischen Fahrfunktionen kann beispielsweise anhand eines der folgenden Faktoren erfolgen: Auftreten eines kritischen beziehungsweise unsicheren Systemzustands, gefährliche oder zu dynamische Manöver, Eingriffe einer Sicherheitsfunktion in die automatische Steuerung, unkomfortables Fahrverhalten, unsichere (virtuelle) Sensorik oder eine festgestellte Fehlwahrnehmung. Ferner kann eine nicht-optimale Abstimmung von Einzelkomponenten entlang der Verarbeitungskette des automatischen Fahrens festgestellt werden, insbesondere bei einem der Elemente Sensorik, Wahrnehmung, Erkennung, Situationserfassung, Produktion, Planung und Aktorik. Zudem kann eine Schwäche festgestellt werden, wenn ein Eingriff durch den Fahrzeugführer erfasst wurde.

Die Erzeugung der Bedarfsmeldung erfolgt insbesondere mittels Sensordaten, die während einer automatischen Fahrt der mobilen Einheit erfasst werden. Diese Sensordaten können beispielsweise durch Sensoren der mobilen Einheit selbst oder durch fahrzeugexterne Sensoren erfasst werden. Die Auswertung dieser Sensordaten und die Erzeugung der Bedarfsmeldung kann ebenfalls durch unterschiedliche Einheiten erfolgen.

Insbesondere wird, um eine Schwäche der automatischen Fahrfunktionen zu identifizieren, ein mittels Sensoren gemessener Parameter mit einem Schwellenwert verglichen und bei Überschreitung beziehungsweise Unterschreitung des Schwellenwerts kann dies als Hinweis auf das Vorliegen einer Schwäche interpretiert werden. Zum Beispiel kann der Parameter eine Beschleunigung in Längs- und/oder Querrichtung relativ zur Fahrzeugachse sein, wobei in diesem Fall die Identifikation einer nicht-optimalen Funktionsweise anhand des Auftretens einer ruckartigen Beschleunigung oder Verzögerung durchgeführt werden kann. Der Parameter kann bei einem weiteren Beispiel eine Geschwindigkeit der mobilen Einheit sein, die mit Geschwindigkeiten anderer mobiler Einheiten auf der gleichen Strecke verglichen wird. Beispielsweise festgestellt, dass die automatisch gesteuerte mobile Einheit die gleiche Strecke deutlich langsamer bewältigt als andere mobile Einheiten, so kann daraus auf eine nicht-optimale Funktionsweise geschlossen werden.

Die identifizierten Schwächen der automatischen Fahrfunktionen können insbesondere sogenannte "*Corner* Cases" umfassen, die in Extremfällen auftreten können, insbesondere wenn bestimmte Parameter gleichzeitig extreme Werte annehmen. Ferner können die Schwächen Situationen darstellen, in denen eine Nachbesserung des Steuerungsmodells für die automatische Steuerung notwendig ist.

Bei einer weiteren Ausbildung wird die Bedarfsmeldung durch die mobile Einheit erzeugt, wobei insbesondere mittels Sensoren der mobilen Einheit erfasste Fahrdaten genutzt werden. Dadurch erhält die zentrale Steuerungseinheit vorteilhafterweise direkt von der mobilen Einheit Informationen über Aktualisierungsbedarf für das Steuerungsmodell.

Bei einer Weiterbildung wird die Bedarfsmeldung durch eine Verkehrsüberwachungseinrichtung erzeugt. Die Erzeugung erfolgt insbesondere automatisch. Dadurch können vorteilhafterweise zusätzliche fahrzeugexterne Einrichtungen genutzt werden, um eine Schwäche der automatischen Steuerung zu identifizieren.

Die Verkehrsüberwachungseinrichtung ist dabei insbesondere eine fahrzeugexterne, relativ zur befahrenen Straße fest installierte Einrichtung zur Erfassung von Daten über den Verkehr in einem bestimmten räumlichen Bereich. Dabei kann auch eine Kommunikation zwischen der mobilen Einheit und der Verkehrsüberwachungseinrichtung vorgesehen sein (etwa mittels "*Car2X*"), wobei beispielsweise ein automatisch gesteuertes Fahrzeug identifiziert werden kann. Verkehrsüberwachungseinrichtungen können beispielsweise an Kreuzungen, Baustellen im Bereich von Schulen und öffentlichen Einrichtungen, an Mautstellen oder entlang öffentlicher Verkehrswege vorgesehen sein. Zum Beispiel kann durch eine solche Einrichtung die Bewegung der mobilen Einheit erfasst werden, insbesondere im Zusammenhang mit weiteren mobilen Einheiten, und es kann eine Bewertung vorgenommen werden. Zum Beispiel kann erkannt werden, ob durch die mobile Einheit eine optimale Trajektorie befahren wird, um eine Strecke möglichst sicher und schnell zurückzulegen. Beispielsweise kann eine Verkehrsüberwachungseinrichtung registrieren, dass ein automatisch gesteuertes Fahrzeug in bestimmten Situationen dazu neigt, Schlangenlinien zu fahren.

In weiteren Beispielen kann eine Schwäche durch eine weitere Einheit identifiziert werden, etwa durch eine Untereinheit der zentralen Steuerungseinheit oder einen externen Server. Dabei können durch die mobile Einheit und/oder Verkehrsüberwachungseinrichtungen erfasste Daten ausgewertet werden, um das Auftreten einer Schwäche und Informationen über einen Kontext, in dem diese Schwäche auftritt, zu ermitteln. Die Bedarfsmeldung kann in diesem Fall von der weiteren Einheit erzeugt und an die zentrale Steuerungseinheit übertragen werden.

Die Identifizierung von Optimierungsbedarf für eine automatische Funktion beziehungsweise ein Steuerungsmodell kann auf unterschiedliche Weise erfolgen. Zunächst kann das Auftreten der Schwäche selbst anhand der oben beschriebenen Faktoren erkannt werden, etwa anhand ruckartiger Geschwindigkeitsänderungen oder automatischer Eingriffe einer Sicherheitsfunktion. Ferner können Verfahren des "*Data Mining*" verwendet werden, um zu bestimmen, in welchen Situationen die Schwächen auftreten. Dabei können Fahrdaten untersucht werden, um Korrelationen aufzudecken zwischen Systemschwächen und Umgebungsparameter, etwa geographische Parameter, klimatische Bedingungen, Verkehr, Straßenart, Geschwindigkeit, Tages- und Jahreszeit usw. Ferner kann eine Verkehrsbeobachtung genutzt werden, um Anomalien zu erkennen, etwa einen Stau oder dichten Verkehr. Zudem kann eine Bewertung der Verlässlichkeit von Entscheidungen zur Laufzeit einzelner Module entlang der Verarbeitungskette vorgenommen werden. Es können Plausibilisierungsmethoden für Einzelkomponenten oder das Gesamtsystem angewandt werden. Ferner kann eine Häufigkeit bestimmt werden, mit der zwischen redundanten Systemkomponenten umgeschaltet wird. Es können zudem physikalische Messgrößen bewertet werden, etwa Längs- und Querbeschleunigungen, insbesondere relativ zum umgebenden Verkehr oder dem Straßenverlauf. Es kann eine Rückmeldung von Insassen gemessen werden, etwa durch eine Fahrerbeobachtung, eine Erfassung manueller Eingriffe und/oder ein explizites Feedback. Ferner kann ein Parameter gemessen und mit einer Vorhersage für den gleichen Parameter aus einem vorhergehenden Zeitschritt verglichen werden, um die Zuverlässigkeit der Vorhersage zu bewerten.

Bei einer Ausbildung empfängt die zentrale Steuerungseinheit eine Vielzahl von Bedarfsmeldungen. Es wird eine Gewichtung der Bedarfsmeldung ausgeführt und der Erfassungsauftrag wird anhand der gewichteten Bedarfsmeldung erzeugt. Dadurch können vorteilhafterweise mehrere Bedarfsmeldungen verwaltet und die Erzeugung des Erfassungsauftrags koordiniert werden.

Hierzu werden vermittelte Schwächen, insbesondere anhand von Bedarfsmeldungen, durch die zentrale Steuerungseinheit gesammelt und ausgewertet. Vordringlich zu optimierende Aspekte eines Steuerungsmodells können identifiziert werden, beispielsweise anhand der Häufigkeit, mit der eine funktionale Schwäche auftritt, anhand einer starken Korrelationen zwischen einer funktionalen Schwäche und bestimmten Umgebungsparametern oder anhand der Schwere festgestellter Schwächen. Hierzu kann die Schwere einer Schwäche anhand einer festgelegten Skala bewertet werden und schwerwiegendere Schwächen können vordringlich behandelt werden. Die Gewichtung der Bedarfsmeldungen kann also anhand unterschiedlicher Beurteilungskriterien vorgenommen werden, wobei auch Kombinationen der Kriterien vorgesehen sein können.

Dieser Vorgang des Sammelns und Auswertens wird insbesondere vollautomatisch, stetig und parametrisiert von der zentralen Steuerungseinheit durchgeführt. Insbesondere werden hierbei Verfahren aus dem Bereich des "*Big Data*" verwendet, wobei große Mengen von Daten unterschiedlicher Art mit hoher Geschwindigkeit verarbeitet werden.

Nach der Identifikation einer zu optimierenden Funktionalität beziehungsweise eines zu aktualisierenden Steuerungsmodells erzeugt die zentrale Steuerungseinheit einen Erfassungsauftrag und überträgt diesen an die mobile Einheit. Der Erfassungsauftrag ist insbesondere ein expliziter Lernauftrag, der etwa an die Fahrzeuge einer Fahrzeugflotte übertragen wird. Die von dem Erfassungsauftrag umfassten Bedingungen für die Erfassung von Sensordatensätzen sind spezifisch für den jeweiligen Anwendungsfall ausgebildet.

Der Erfassungsauftrag kann sich auf eine Modulebene beziehen, wobei das Modul innerhalb der automatischen Steuerung der mobilen Einheit zur Steuerung einer bestimmten automatischen Fahrfunktionen dient. Das Steuerungsmodell wird dabei durch das Modul verwendet, um Zielgrößen der automatischen Steuerung zu bestimmen und/oder Entscheidungen für die automatische Steuerung zu treffen. Bei einem Modul können unterschiedliche nicht-optimale Funktionsweisen auftreten, beispielsweise eine große Unsicherheit, Fehlklassifikationen oder fehlerhafte Vorhersagen. Zur Optimierung können spezifische Daten für die Situation, bei der die Schwäche des Steuerungsmodells auftritt, gesammelt werden. Diese Daten können beispielsweise Bilddaten, Kartendaten und/oder unterschiedliche Sensordaten umfassen. Es kann eine lokale Aktualisierung des Steuerungsmodells erfolgen, wobei in diesem Fall die Übertragungsdaten Daten dieser lokalen Aktualisierung umfassen und die zentrale Steuerungseinheit eine Konsolidierung vornehmen kann, bei welcher die lokal (beispielsweise in mehreren unterschiedlichen mobilen Einheiten) vorgenommenen Aktualisierungen zur Erzeugung eines aktualisierten Steuerungsmodells zusammengeführt werden.

Alternativ oder zusätzlich kann der Erfassungsauftrag auf eine Planungsebene der automatischen Steuerung bezogen sein. In diesem Fall betrifft die Schwäche ein Steuerungsmodell, das anhand der Ausgaben mehrerer Module eine automatische Fahrfunktion steuert. Ein Steuerungsmodell der Planungsebene ist also insbesondere auf einer gegenüber der Modulebene übergeordneten Stufe angesiedelt.

Bei einer Funktion zur automatischen Fahrplanung kann vorgesehen sein, dass in relevanten Situationen aus einer Reihe unterschiedlicher Kandidaten für Trajektorien und/oder Entscheidungen zur automatischen Steuerung ausgewählt wird. Dabei soll der beste Kandidat ausgewählt werden. Zur Optimierung einer solchen Funktion ist Explorationsphase vorgesehen, während welcher nicht die als "bester Kandidat" erkannte Option gewählt wird, sondern eine andere sicher befahrbare, aber als nicht präferiert bestimmte Trajektorie. Das heißt, es werden andere Kandidaten außer der eigentlich präferierten Option ausprobiert und können anhand der bei der Ausführung erfassten Daten neu bewertet werden. Die auf diese Weise erzeugten neuen Bewertungsergebnisse werden an die zentrale Steuerungseinheit übertragen und das Steuerungsmodell wird auf der Ebene der automatischen Fahrtplanung anhand des neu generierten Wissens optimiert.

Ferner kann eine Optimierung auf einer System- und Redundanzebene erfolgen, wobei durch das systematische Erheben von Entscheidungsparametern in der internen Abschätzung der einzelnen Modulergebnisse entlang der Verarbeitungskette und auf Redundanzebene verschiedene Systemeinstellungen hinsichtlich einer konkret gegebenen situativen Schwäche explorativ optimiert. Bei einer solchen explorativen Optimierung können, ähnlich wie oben beschrieben, Entscheidungen bei der automatischen Steuerung für nicht präferierte Optionen getroffen werden, solange diese als genügend sicher bewertet werden.

Es kann vorgesehen sein, dass der Erfassungsauftrag an sämtliche Fahrzeuge einer Fahrzeugflotte übertragen wird. Dies kann insbesondere zur Erhebung von Daten erfolgen sowie zum Trainieren und Optimieren eines Steuerungsmodells in einem "*Shadow Mode*", bei dem das Steuerungsmodell oder eine Teilfunktionalität davon weder aktiv in das Fahrsystem eingreift noch die aktuelle Konfiguration der automatischen Fahrfunktion verändert. Auf diese Weise wird sichergestellt, dass keine unkontrollierten Änderungen der automatischen Steuerung erfolgen.

Ferner kann der Erfassungsauftrag einen Teil einer Fahrzeugflotte betreffen, insbesondere Fahrzeuge, die in einer besonderen Weise technisch ausgerüstet sind oder deren Fahrer einer sicheren, explorativen Datenerhebung zugestimmt haben. In diesem Fall können insbesondere Daten über ein Verhalten der automatischen Steuerung im Sinne der Daten- und Wissenserstellung und im Bereich sicheren Fahrverhaltens erfasst und verändert werden. Insbesondere kann ein solcher Teil der Fahrzeugflotte besondere Forschungs- und Entwicklungsfahrzeuge umfassen, die von Testfahrern gefahren werden und mit besonderer Entwicklungshardware und/oder besonderen Sensoren ausgestattet sind.

Im weiteren Ablauf des Verfahrens wird durch die beteiligten mobilen Einheiten ein kooperatives Explorieren und Messen durchgeführt, ferner kann ein kooperatives Lernen durch die mobilen Einheiten erfolgen. Dieses wird durch die zentrale Steuerungseinheit koordiniert.

Der an die mobilen Einheiten übertragene Erfassungsauftrag wird ausgeführt. Verfahrensgemäß werden Sensordatensätze erfasst und Übertragungsdaten erzeugt, die schließlich an die zentrale Steuerungseinheit übertragen werden. Dabei werden insbesondere die von dem Erfassungsauftrag umfassten Bedingungen für die Erfassung von Sensordatensätzen berücksichtigt. Insbesondere kann eine Anmeldung der beteiligten mobilen Einheiten bei der zentralen Steuerungseinheit erfolgen, wobei insbesondere eine datentechnische Verbindung aufgebaut wird und der Erfassungsauftrag übertragen wird.

Bei einer weiteren Ausbildung umfassen die Bedingungen des Erfassungsauftrags für die Erfassung von Sensordatensätzen Daten über Verkehrssituationen. Die Sensordatensätze können dadurch vorteilhafterweise besonders gezielt für bestimmte Situationen erfasst werden, in denen eine Schwäche des bestehenden Systems festgestellt wurde. Die Daten über Verkehrssituationen betreffen beispielsweise Merkmale einer Verkehrsinfrastruktur wie Kreuzungen, Fahrbahnverlauf oder Straßentypen. Sie können ferner bestimmte Fahrmanöver betreffen sowie einen Zustand der mobilen Einheit, beispielsweise anhand von Fahrzeugdaten. Sie können ferner weitere mobile Einheiten betreffen, die sich insbesondere im Umfeld der mobilen Einheit befinden.

Der Erfassungsauftrag kann alternativ oder zusätzlich weitere Bedingungen umfassen, beispielsweise Informationen über betreffende Funktionalitäten, Parameter zur Definition der Situationen, für die Sensordatensätze erfasst werden sollen (zum Beispiel auslösende Ereignisse, definierende Rahmenbedingungen für den durchzuführenden Lernprozess), zu optimierende Systemparameter, auslösende Bedingungen sowie Art und Qualität der zu erfassenden Daten. Ferner kann der Erfassungsauftrag Informationen über eine bestimmte Art der Erfassung von Sensordatensätzen sowie deren Verarbeitung für die Erzeugung von Übertragungsdaten umfassen, etwa einen bestimmten Algorithmus, definierende Parameter oder Lernraten bei einer bestimmten Trainingsmethode. Ferner kann eine Updatefrequenz definiert sein, welche die Übertragung der Übertragungsdaten an die zentrale Steuerungseinheit definiert. Zudem können Abschlussbedingungen definiert sein ("*Definition of Done*"), wobei eine Abschlusskonfiguration definiert ist, die ein finales Übertragen der Übertragungsdaten an die zentrale Steuerungseinheit definiert. Während der Erfassung der Sensordatensätze und der Erzeugung der Übertragungsdaten können ferner Metainformationen gesammelt werden, deren Art durch die Bedingungen des Erfassungsauftrags festgelegt wird.

Die durch die mobile Einheit erfassten und/oder erzeugten Informationen können mittels einer Bewertungsmatrix für Funktionsvarianten strukturiert werden, um die Daten auf eine systematische und einfach zu verarbeitende Weise bereitzustellen.

Während der automatischen Steuerung der mobilen Einheit werden durch ihre jeweiligen Sensoren Sensordaten erfasst und es werden Situationen oder Situationsklassen erkannt, für welche der Erfassungsauftrag die Erfassung und/oder Übertragung von Daten beziehungsweise ein Auslösen eines Lernvorgangs vorsieht.

Insbesondere ist vorgesehen, dass die von den Sensoren der mobilen Einheit erfassten Daten in einem Ringspeicher abgelegt werden, der beispielsweise zu jedem Zeitpunkt die Daten der letzten 10 Minuten vorhält. Die vorgehaltenen Daten können beispielsweise Sensordaten, Kartendaten und/oder über einen CAN-Bus verfügbare Daten umfassen. Wird eine relevante Situation oder Situationsklasse detektiert, können auch Daten aus der näheren Vergangenheit aus dem Ringspeicher abgerufen werden.

Ferner kann vorgesehen sein, dass bei mehreren Beteiligten mobilen Einheiten eine Synchronisierung der erfassten Daten erfolgt.

Der Erfassungsauftrag definiert insbesondere Bedingungen für einen Abschluss der Lernphase durch die mobile Einheit, wobei hier insbesondere die Erfassung von Sensordatensätzen beendet wird und/oder die Übertragung der Übertragungsdaten erfolgt. Beispielweise kann dies zu einem bestimmten, vorher festgelegten Zeitpunkt erfolgen. Ferner kann eine Abbruchbedingung vorgesehen sein oder es kann ein Signal von der zentralen Steuerungseinheit an die mobile Einheit übertragen werden, um den Abschluss der Lernphase auszulösen.

Beim Erreichen des Abschlusskriteriums für einen Erfassungsauftrag wird die Phase der Erfassung von Sensordatensätzen und der Erzeugung von Übertragungsdaten für alle teilnehmenden mobilen Einheiten beendet. Die gewonnenen Informationen, die insbesondere mittels der Übertragungsdaten an die zentrale Steuerungseinheit übertragen wurden, werden durch die zentrale Steuerungseinheit aggregiert und verarbeitet. Das aktualisierte Steuerungsmodell wird erzeugt, wobei insbesondere die neuen Informationen in die jeweilige Funktion integriert werden, um die jeweilige Funktion robuster auszugestalten und/oder zu optimieren. Dabei kann ferner eine Kompression des aktualisierten Steuerungsmodells vorgenommen werden. Neu gewonnenes Wissen kann bestimmt und gespeichert werden. Bereits vorhandene, ältere Daten können zusätzlich zu den durch den Erfassungsauftrag erhaltenen Daten zum Generieren des aktualisierten Steuerungsmodells verwendet werden.

Bei einer Weiterbildung führt die zentrale Steuerungseinheit zur Erzeugung des aktualisierten Steuerungsmodells anhand der Übertragungsdaten ein Training für ein bisheriges Steuerungsmodell durch. Insbesondere wird dabei ein Maschinenlernverfahren verwendet. Dadurch kann vorteilhafterweise eine gezielte Optimierung des Steuerungsmodells erreicht werden.

Bei einer Ausbildung wird zur Erzeugung der Übertragungsdaten durch die mobile Einheit ein Training eines integrierten Steuerungsmodells durchgeführt. Insbesondere umfassen die Übertragungsdaten Daten des auf diese Weise trainierten integrierten Steuerungsmodells. Auch hier wird insbesondere ein Maschinenlernverfahren verwendet. Dadurch kann vorteilhafterweise eine Vorverarbeitung der Übertragungsdaten so erfolgen, dass beispielsweise eine anonymisierte Weitergabe der Daten sichergestellt werden kann. Ferner kann auf diese Weise ein kooperatives Lernverfahren besonders effizient gestaltet werden. Insbesondere umfassen die Übertragungsdaten in diesem Fall Daten eines Steuerungsmodells das bereits durch ein Trainingsverfahren trainiert wurde, sodass ein vorläufig trainiertes Steuerungsmodell bereitgestellt wird.

Das heißt, der Trainingsprozess kann durch die mobile Einheit selbst und/oder durch die zentrale Steuerungseinheit erfolgen. Dies erlaubt eine besonders flexible Ausgestaltung des Systems, indem verschiedene Schritte des Trainings durch die jeweils am besten geeignete Einheit durchgeführt werden.

Durch die zentrale Steuerungseinheit wird anhand der Übertragungsdaten eine Konsolidierung durchgeführt, wobei auch übertragene Daten von Trainingsprozessen in der mobilen Einheit verwendet werden können. Insbesondere können die Ergebnisse von Trainings in mehreren mobilen Einheiten konsolidiert werden, etwa durch eine Mittelung von bestimmten Parametern oder andere an sich bekannte Verfahren des verteilten Lernens.

Es können weitere Schritte durchgeführt werden, die für eine Anwendung des aktualisierten Steuerungsmodells für die mobile Einheit vorausgesetzt werden. Beispielsweise kann eine Bewertung unter Sicherheitsaspekten vorgenommen werden, das aktualisierte Steuerungsmodell kann für eine bestimmte Zielhardware optimiert werden, etwa indem eine Verkleinerung vorgenommen wird oder nicht genutzte Teilfunktionalitäten entfernen werden. Ferner kann eine Strukturoptimierung erfolgen, um eine optimale Hardwareauslastung zu erreichen.

Bei einer weiteren Ausbildung wird das aktualisierte Steuerungsmodell an die mobile Einheit übertragen und eine automatische Steuerung der mobilen Einheit wird anhand des aktualisierten Steuerungsmodells durchgeführt. Dadurch profitiert vorteilhafterweise die mobile Einheit von dem anhand der Sensordatensätze optimierten Steuerungsmodell, indem eine verbesserte Steuerung möglich gemacht wird.

Dabei kann zunächst eine Übergabe des aktualisierten Steuerungsmodells an einen Freigabeprozess erfolgen, durch den sichergestellt wird, dass nur freigegebene Aktualisierungen oder Änderungen bei dem Steuerungsmodell der mobilen Einheit vorgenommen werden. Anschließend kann ein *"Roll-out*" erfolgen, bei dem das aktualisierte Steuerungsmodell an die mobile Einheit übertragen wird und anschließend zur automatischen Steuerung verwendet werden kann.

Bei weiteren Ausbildungen der Erfindung können Einrichtungen einer fahrzeugexternen Infrastruktur alternativ oder zusätzlich zur Nutzung mobiler Einheiten zur Erfassung von Sensordatensätzen und Erzeugung von Übertragungsdaten verwendet werden. Wie oben beschrieben, kann eine Bedarfsmeldung durch eine Verkehrsüberwachungseinrichtung erzeugt werden. Daneben können jedoch auch weitere Daten erfasst werden, beispielsweise durch eine Einrichtung zur Beobachtung des Verkehrs entlang einer bestimmten Strecke. Auf diese Weise kann ein kooperatives Lernen basierend auf möglichst vielen Informationsquellen realisiert werden.

Zum Beispiel können Fahrfunktionen durch Einrichtungen einer Infrastruktur zur Verkehrsüberwachung, etwa Kameras und/oder Kommunikationseinrichtungen an einer Straße oder Kreuzung, verwendet werden, um Sensordatensätze für das erfindungsgemäße Verfahren zu erfassen und geeignete Übertragungsdaten bereitzustellen. Hierzu können diese Einrichtungen optimiert werden, um etwa bestimmte Verfahrensschritte einer Vorverarbeitung anhand erfasster Daten durchzuführen.

Einrichtungen einer solchen Infrastruktur können beispielsweise einen Optimierungsbedarf feststellen sowie eine entsprechende Bedarfsmeldung erzeugen und an die zentrale Steuerungseinheit übertragen. Nachfolgend kann ein Erfassungsauftrag für ähnliche Situationen erzeugt und an mobiler Einheiten übertragen werden, wobei hierbei die Bedingungen so erzeugt werden können, dass neben der konkreten durch die Infrastruktureinrichtung überwachten Situation, etwa einer bestimmten Kreuzung, auch Sensordatensätze für vergleichbare Situationen erfasst werden, etwa an ähnlichen, nicht durch eine feste Infrastruktur überwachten Kreuzungen.

Ferner kann ein Optimierungsbedarf in einer Situation ohne Infrastrukturüberwachung festgestellt wird und ein Erfassungsauftrag für eine mittels einer Infrastruktureinrichtung überwachte Situation erstellt werden. Das gewonnene Wissen kann dann auf semantisch ähnliche Situationen, etwa vergleichbare Kreuzungen, übertragen werden. Das aktualisierte Steuerungsmodell kann so gebildet werden, dass eine Optimierung mittels Daten aus überwachten Situationen auch für eine nicht überwachte Situationen erfolgt.

Das erfindungsgemäße System zum Aktualisieren eines Steuerungsmodells für eine automatische Steuerung zumindest einer mobilen Einheit umfasst eine zentrale Steuerungseinheit, die ausgebildet ist, einen Erfassungsauftrag zu erzeugen und an die mobile Einheit zu übertragen; wobei die mobile Einheit Sensoren umfasst und der Erfassungsauftrag Bedingungen für die Erfassung von Sensordatensätzen mittels der Sensoren umfasst; wobei durch die Bedingungen definiert wird, in welchen Fahrsituationen welche Arten von Sensordaten erfasst werden sollen,die Sensoren der mobilen Einheit ausgebildet sind, anhand des Erfassungsauftrags die Sensordatensätze zu erfassen, anhand der erfassten Sensordatensätze Übertragungsdaten zu erzeugen, und die Übertragungsdaten an die zentrale Steuerungseinheit zu übertragen; wobei die zentrale Steuerungseinheit ausgebildet ist, die Übertragungsdaten zu empfangen, und anhand der empfangenen Übertragungsdaten ein aktualisiertes Steuerungsmodell zur automatischen Steuerung der mobilen Einheit zu erzeugen,wobei das System ferner so eingerichtet ist, dass eine Vielzahl von Kandidaten für Trajektorien zur automatischen Steuerung erzeugt wird, und eine als sicher befahrbare und nicht präferiert bestimmte Trajektorie befahren wird, wobei die nicht präferierte Trajektorie anhand der bei der Ausführung erfassten Sensordatensätzen neu bewertet wird, die auf diese Weise erzeugten neuen Bewertungsergebnisse an die zentrale Steuerungseinheit übertragen werden und das Steuerungsmodell zur automatischen Fahrtplanung optimiert wird.

Das erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

Insbesondere umfasst das System eine Vielzahl mobiler Einheiten, insbesondere eine Vielzahl von Kraftfahrzeugen.

Die Erfindung wird nun anhand von Ausführungsbeispielen mit Bezug zu den Zeichnungen erläutert.
- Figuren 1A und 1B: zeigen Ausführungsbeispiele des erfindungsgemäßen Systems,
- Figur 2: zeigt ein Ausführungsbeispiel der erfindungsgemäßen Verfahrens und
- Figur 3: zeigt ein Beispiel für exploratives Erfassen von Sensordaten einer automatischen Fahrt.

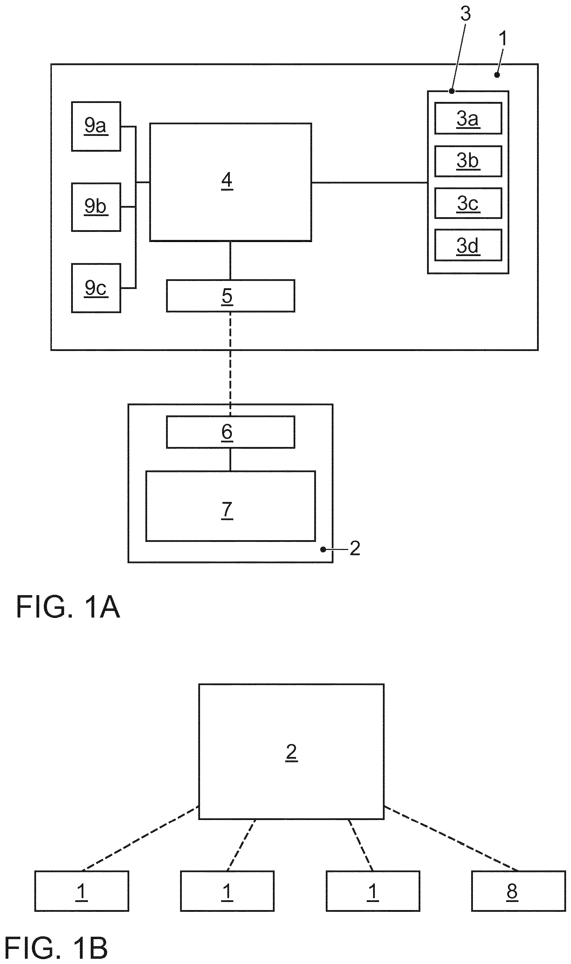

Mit Bezug zu den Figuren 1A und 1B werden Ausführungsbeispiele des erfindungsgemäßen Systems erläutert.

Eine mobile Einheit 1, im vorliegenden Fall ein Fahrzeug 1, umfasst eine Recheneinheit 4, die mit einer Erfassungseinheit 3, Aktoren 9a, 9b, 9c und einer Fahrzeugschnittstelle 5 gekoppelt ist. Die Erfassungseinheit 3 umfasst Sensoren 3a, 3b, 3c, 3d. Die Aktoren 9a, 9b, 9c umfassen bei dem Beispiel Einrichtungen für eine Motorsteuerung, eine Lenkung sowie Bremsen des Fahrzeugs 1. Die Sensoren 3a, 3b, 3c, 3d sind auf an sich bekannte Weise gebildet und umfassen beim Beispiel eine Kamera, einen Laserscanner, Ultraschall-Abstandssensoren sowie eine Einrichtung zur Erfassung von Nutzereingaben.

Mittels der Fahrzeugschnittstelle 5 ist eine datentechnische Verbindung (angedeutet durch eine gestrichelte Linie) zu einer Serverschnittstelle 6 einer zentralen Steuerungseinheit 2, im vorliegenden Fall ein fahrzeugexterner Server 2, zumindest zeitweise herstellbar. Der Server 2 umfasst eine mit der Serverschnittstelle 6 gekoppelte Aktualisierungseinheit 7.

In weiteren Ausführungsbeispielen können das Fahrzeug 1 und der Server 2 anders aufgebaut sein. Insbesondere kann die Ausstattung des Fahrzeugs 1 mit Sensoren 3a, 3b, 3c, 3d und Aktoren 9a, 9b, 9c unterschiedlich ausgebildet sein.

Wie in Figur 1B gezeigt, kann das System eine Vielzahl mobiler Einheiten 1 umfassen, die zumindest zeitweise eine datentechnische Verbindung zu der zentralen Steuerungseinheit 2 herstellen können. Bei diesem Ausführungsbeispiel ist ferner eine Verkehrsüberwachungseinrichtung 8 vorgesehen, für die ebenfalls eine datentechnische Verbindung zu der zentralen Steuerungseinheit herstellbar ist. Die Verkehrsüberwachungseinrichtung 8 ist hier nicht im Detail gezeigt, sie umfasst jedoch analog zu den mobilen Einheiten 1 eine Erfassungseinheit mit Sensoren 3a, 3b, 3c, 3d sowie eine Recheneinheit 4 und eine Schnittstelle zur Herstellung der datentechnischen Verbindung. Die Anzahl der mobilen Einheiten 1 und Verkehrsüberwachungseinrichtungen 8 kann selbstverständlich je nach der konkreten Ausführungsform unterschiedlich sein.

In weiteren Ausführungsbeispielen kann vorgesehen sein, dass datentechnische Verbindungen der mobilen Einheiten 1 zueinander und/oder zu den Verkehrsüberwachungseinrichtungen 8 herstellbar sind, beispielsweise auf an sich bekannte Weise mittels eines *Car2Car-*beziehungsweise Car2X-Verfahrens.

Die datentechnischen Verbindungen können dauerhaft bestehen oder zu bestimmten Zeitpunkten hergestellt werden, etwa periodisch oder auf Anforderung. Sie werden auf an sich bekannte Weise hergestellt, insbesondere durch eine drahtlose Verbindung, etwa über ein Mobilfunknetz, ein lokales Computernetzwerk (etwa WLAN) oder mittels einer weiteren Einrichtung, über welche die datentechnische Verbindung herstellbar ist, etwa ein Mobiltelefon. Insbesondere wird die Verbindung über ein Computernetzwerk wie das Internet hergestellt.

Ferner ist insbesondere vorgesehen, dass die Herstellung der datentechnischen Verbindung mit einem Verfahren zur Authentifizierung verbunden ist. Dabei kann eine geschützte Verbindung zwischen dem Server 2 und dem Fahrzeug 1 beziehungsweise der Verkehrsüberwachungseinrichtung 8 hergestellt werden. Dies erfolgt beispielsweise mittels eines Login-Verfahrens.

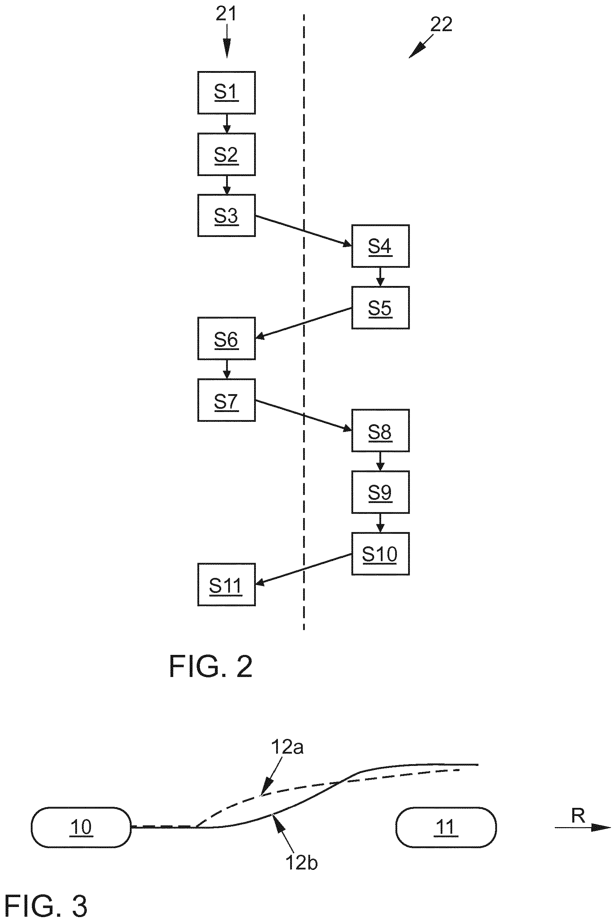

Mit Bezug zu Figur 2 wird ein Ausführungsbeispiel der erfindungsgemäßen Verfahrens erläutert. Dabei deutet eine gestrichelte Linie die Trennung zwischen Verfahrensschritten an, die im Fahrzeug 1 durchgeführt werden (Bezugszeichen 21) beziehungsweise die im Server 2 durchgeführt werden (Bezugszeichen 22).

In einem ersten Schritt S1 wird eine automatische Fahrt mit dem Fahrzeug 1 durchgeführt. Dabei werden unterschiedliche automatische Fahrfunktionen durch Module gesteuert, die mittels Steuerungsmodellen Fahrentscheidungen treffen und/oder Parameter für die Steuerung der Fahrt bestimmen. Bei dem in Figur 1A gezeigten Ausführungsbeispiel des erfindungsgemäßen Systems sind die Module mit den Steuerungsmodellen von der Recheneinheit 4 umfasst und es werden Steuersignale erzeugt und an die Aktoren 9a, 9b, 9c übertragen, durch die dann die eigentliche Steuerung des Fahrzeugs erfolgt, insbesondere seiner Bewegung.

In einem weiteren Schritt S2 wird eine Schwäche detektiert, das heißt ein Fall einer nicht-optimalen Funktionsweise der automatischen Steuerung. Diese Detektion erfolgt bei dem Beispiel mittels Sensordaten des Fahrzeugs 1, durch die unter anderem Beschleunigungen in Links- und Querrichtung relativ zur Längsachse des Fahrzeugs erfasst werden. Die Beschleunigung wird mit einem Schwellenwert verglichen und bei einer Überschreitung (das heißt zum Beispiel bei einer ruckartigen Bremsung oder einer plötzlichen Abweichung von der Fahrtrichtung) wird dies als Auftreten einer Schwäche gewertet. Dabei können alternativ oder zusätzlich weitere Verfahren zur Erkennung einer Schwäche verwendet werden, beispielsweise ein Abgleich mit weiteren Sensordaten, durch die beispielsweise eine genauere Erkennung der Verkehrssituation erreicht werden kann. In weiteren Ausführungsbeispielen können andere Verfahren vorgesehen sein, um Schwächen der automatischen Fahrt zu erkennen.

Die detektierte Schwäche wird einem Modul für die automatische Steuerung zugeordnet, insbesondere erfolgt die Zuordnung zu einem bestimmten Steuerungsmodell des Moduls. Zum Beispiel kann eine Schwäche für ein bestimmtes Modul mit einem Steuerungsmodell für die Planung einer Kurvenfahrt, ein Überholmanöver, das Einhalten eines bestimmten Abstandes zu anderen Verkehrsteilnehmern oder für einen Spurassistenten detektiert werden. Weitere Beispiele umfassen ein Modul zur Steuerung einer Folgefahrt hinter einem vorausfahrenden weiteren Fahrzeug, ein Modul zur Durchführung eines Abbiegevorgangs, ein Modul zum Durchfahren einer Baustelle und/oder ein Modul zur Durchführung eines Parkvorgangs. In der Folge soll das betroffene Steuerungsmodell trainiert werden, um es zu optimieren.

Dazu wird in einem Schritt S3 eine Bedarfsmeldung erzeugt und an den Server 2 übertragen. Die Bedarfsmeldung umfasst Informationen über die detektierte Schwäche und die Situation, in der sie detektiert wurde. Hierzu werden die erfassten Sensordaten ausgewertet und bei dem Verfahren können unterschiedliche Weisen vorgesehen sein, die Bedarfsmeldung zu erzeugen. Insbesondere kann der mit der Bedarfsmeldung übertragene Informationsgehalt unterschiedlich definiert sein.

Wesentlich ist hierbei, dass Informationen darüber übertragen werden, in welcher Situation eine nicht-optimale automatische Steuerung erfolgt und wie sich dies auf die automatische Fahrt auswirkt. Anhand dieser Informationen kann das für die Schwäche verantwortliche Steuerungsmodell ermittelt werden und es kann bestimmt werden, in welchen Situationen ein Nachtrainieren des Steuerungsmodells erforderlich ist.

In weiteren Ausführungsbeispielen kann die Bedarfsmeldung durch eine Verkehrsüberwachungseinrichtung 8 erzeugt und an den Server 2 übertragen werden. Dies kann auf eine Weise analog zum oben beschriebenen Vorgehen erfolgen. In weiteren Ausführungsbeispielen kann eine Übertragung einer Bedarfsmeldung zwischen mehreren Fahrzeugen 1 und/oder Verkehrsüberwachungseinrichtungen 8 erfolgen, wobei beispielsweise eine Koordination mehrerer Bedarfsmeldungen erfolgen kann, etwa eine Bestätigung einer nicht-optimalen Funktionsweise einer automatischen Fahrfunktionen durch mehrere Einrichtungen und Einheiten.

In einem Schritt S4 wird die Bedarfsmeldung von dem Server 2 empfangen. Bei dem Ausführungsbeispiel wird eine Vielzahl von Bedarfsmeldungen empfangen, die durch ein oder mehrere Fahrzeuge 1 und/oder eine oder mehrere Verkehrsüberwachungseinrichtungen 8 erzeugt wurden. Der Server 2 nimmt eine Vorverarbeitung vor, wobei beispielsweise bestimmt wird, wie viele Bedarfsmeldungen für ähnliche Situationen und/oder das gleiche Steuerungsmodell empfangen wurden. Alternativ oder zusätzlich kann die Schwere der Bedarfsmeldungen bewertet werden. Anhand der Anzahl und oder Schwere der Bedarfsmeldungen können diese gewichtet werden, um zu bestimmen, für welche Steuerungsmodelle eine Optimierung durch ein Training durchgeführt werden soll und welche Daten für dieses Training benötigt werden.

In einem Schritt S5 wird ein Erfassungsauftrag erzeugt und an das Fahrzeug 1 übertragen. Der Erfassungsauftrag umfasst Bedingungen, in welchen Situationen Sensordaten erfasst werden sollen, um das gewünschte Training eines Steuerungsmodells durchführen zu können. Die von dem Erfassungsauftrag umfassten Bedingungen betreffen dabei insbesondere Parameter, anhand derer eine Situation erkannt werden soll, für welche das Steuerungsmodell trainiert werden soll.

Bei dem Ausführungsbeispiel umfasst der Erfassungsauftrag Informationen zu bestimmten Funktionalitäten, insbesondere einem Steuerungsmodell, das trainiert werden soll. Er umfasst ferner Situationsparameter, die beispielsweise als Auslöser und definierende Rahmenbedingungen für den durchzuführenden Trainingsprozess dienen, sowie zu optimierende Systemparameter. Umfasst sind ferner Informationen darüber, wie die Sensordaten zu erfassen sind, beispielsweise mit welcher räumlichen und/oder zeitlichen Auflösung, welcher Qualität und in welcher Art. Ferner können Informationen über eine bestimmte Trainingsmethode umfasst sein, etwa einen Algorithmus, Parameter für das Training oder Lernraten. Ferner können Angaben darüber umfasst sein, welche Metainformationen während der Lernphase gesammelt werden sollen.

Der Erfassungsauftrag umfasst bei dem Ausführungsbeispiel ferner Informationen über eine Frequenz, mit der Daten an den Server 2 übertragen werden sollen, sowie eine Definition für die Bedingungen, welche einen Abschluss des Erfassungsauftrags und eine abschließende Übertragung von Daten an den Server 2 definieren.

In einem Schritt S6 empfängt das Fahrzeug 1 den Erfassungsauftrag und erfasst Sensordatensätze mittels der Erfassungseinheit 3, wobei die von dem Erfassungsauftrag umfassten Bedingungen berücksichtigt werden. Insbesondere werden fortlaufend Sensordatensätze erfasst und in einem Ringspeicher abgelegt, der beispielsweise die Sensordatensätze der letzten 10 Minuten speichert. Wenn detektiert wird, dass die Bedingungen des Erfassungsauftrags erfüllt sind, das heißt insbesondere, wenn das Fahrzeug 1 das Vorliegen einer bestimmten Fahrsituation erkennt, für welche ein Training eines Steuerungsmodells durchgeführt werden soll, können entsprechende Daten auch für die nahe zurückliegende Vergangenheit aus dem Ringspeicher abgerufen werden.

Anhand der erfassten Sensordatensätze werden in einem weiteren Schritt S7 Übertragungsdaten erzeugt und von dem Fahrzeug 1 an den Server 2 übertragen. Die Bildung der Übertragungsdaten erfolgt in Abhängigkeit von dem Erfassungsauftrag. Insbesondere definieren die vom Erfassungsauftrag umfassten Bedingungen Kriterien zur Definition einer Situation, in welcher beispielsweise eine Schwäche einer automatischen Fahrfunktion beziehungsweise einer Steuerungsmodells auftritt. Für die derart vorgegebenen Kriterien werden Funktionsvarianten erfasst, die beispielsweise Beobachtungen oder anhand der Sensordatensätze gelernte Varianten umfassen. Auf diese Weise können die Übertragungsdaten so gebildet werden, dass geeignete Daten für mehrere Erfassungsaufträge übertragen werden können, wobei überlappende Kriterien für verschiedene Situationen vorgesehen sein können. Beispielsweise können die Situationen "Kreuzung mit Fußgängern bei Dämmerung" und "Überholmanöver auf Landstraße bei Dämmerung" gemeinsame Kriterien (" bei Dämmerung") aufweisen, für die Funktionsvarianten an den Server übertragen werden sollen.

Die Übertragungsdaten umfassen bei dem Ausführungsbeispiel eine Bewertungsmatrix, die nach folgender Art gebildet ist:

| | Kriterium A | ... | Kriterium Z |
|---|---|---|---|
| Funktionsvariante 1 | a₁ | ... | Z₁ |
| ... | ... | ... | ... |
| Funktionsvariante n | aₙ | ... | Zn |

Dabei bezeichnen "Kriterium A" bis "Kriterium Z" die Kriterien, die insbesondere durch den Erfassungsauftrag vorgegeben sind, "Funktionsvariante 1" bis "Funktionsvariante n" die gelernten Varianten und "a₁" bis "aₙ" die für Varianten erfassten beziehungsweise gelernten Werte.

In weiteren Ausführungsbeispielen können die Sensordatensätze alternativ oder zusätzlich auf andere Art aufbereitet und durch die Übertragungsdaten bereitgestellt werden. Dabei ist wichtig, dass die Übertragungsdaten ein Training beziehungsweise einen Lernvorgang für das Steuerungsmodell für die anhand des Erfassungsauftrags definierten Situationen einer automatischen Fahrt erlauben.

In weiteren Ausführungsbeispielen kann vorgesehen sein, dass durch das Fahrzeug 1 bereits ein Lernvorgang für das Steuerungsmodell durchgeführt wird und die Übertragungsdaten Informationen über das neu trainierte Steuerungsmodell umfassen. Dazu kann in dem Fahrzeug 1 insbesondere ein Modus des Steuerungsmodells aktiviert werden, bei dem es nicht aktiv in die Steuerung eingreift und durch den Lernvorgang verändert werden kann, ohne dass dadurch sicherheitsrelevante Fahrfunktionen verändert würden. Ferner kann ein Lernvorgang des Fahrzeugs während der aktiven Fahrt in bestimmtem Umfang erlaubt sein, wobei Sicherheitsaspekte fortlaufend überwacht werden.

Der Zeitpunkt der Erzeugung und/oder Übertragung der Übertragungsdaten kann auf unterschiedliche Weise bestimmt werden. Beispielsweise kann dies stets nach einer abgeschlossenen Fahrt geschehen oder wenn eine datentechnische Verbindung zu dem Server aufgebaut werden kann. Ferner kann der Erfassungsauftrag Bestimmungen dazu umfassen, wann beziehungsweise unter welchen Umständen die Erzeugung und/oder Übertragung erfolgen soll.

In weiteren Ausführungsbeispielen ist ferner eine Übertragung von Daten zwischen mehreren Fahrzeugen 1 vorgesehen. Beispielsweise können Sensordatensätze oder/oder Übertragungsdaten zwischen den Fahrzeugen 1 übertragen werden. Dadurch kann die Datenübertragung robuster gebildet werden oder es können Lernvorgänge bereits auf der Ebene der Fahrzeuge 1 anhand einer größeren Datenbasis durchgeführt werden.

In einem Schritt S8 empfängt der Server die Übertragungsdaten und in einem Schritt S9 wird ein aktualisiertes Steuerungsmodell erzeugt. Diese Erzeugung erfolgt bei dem Ausführungsbeispiel durch ein Maschinenlernverfahren, bei dem die von den Übertragungsdaten umfassten Informationen für die Funktion eines Steuerungsmodells in bestimmten Situationen genutzt werden. Insbesondere geht der Erzeugung des aktualisierten Steuerungsmodells eine Konsolidierung der Übertragungsdaten, gegebenenfalls von einer Vielzahl Fahrzeuge 1 und/oder Verkehrsüberwachungseinrichtungen 8 voraus, wobei Verfahren des verteilten Lernens verwendet werden können.

Bei dem Ausführungsbeispiel wird von einem Steuerungsmodell ausgegangen, das an eine Vielzahl von Fahrzeugen 1 verteilt wird und auch auf dem Server 8 verfügbar ist. Bei der Aktualisierung des Steuerungsmodells wird ein Lernverfahren verwendet und anhand des durch die Fahrzeuge 1 gelernten Wissens wird ein Training des auf dem Server 8 vorhandenen Steuerungsmodells durchgeführt.

In weiteren Ausführungsbeispielen kann das Training auf andere Weise erfolgen. Zum Beispiel kann in den Fahrzeugen 1 ein Training der dort jeweils verfügbaren Steuerungsmodelle vorgenommen werden und Parameter dieser Steuerungsmodelle können durch die Übertragungsdaten an den Server 8 übertragen werden. Bei der Erzeugung des aktualisierten Steuerungsmodells durch den Server 8 kann ein Vergleich des auf dem Server 8 verfügbaren Steuerungsmodells mit den in den Fahrzeugen 1 trainierten Steuerungsmodellen vorgenommen werden; beispielsweise kann dabei eine Mittelung der Werte von Parametern vorgenommen werden.

In einem Schritt S10 wird das aktualisierte Steuerungsmodelle von dem Server 2 an das Fahrzeug 1 übertragen. Bei weiteren Ausführungsbeispielen kann diesem Schritt ein Freigabeprozess vorgeschaltet sein, bei dem insbesondere die sichere Funktionsweise einer automatischen Fahrfunktion mittels des aktualisierten Steuerungsmodells sichergestellt wird. Dies kann beispielsweise durch eine zentrale Stelle erfolgen, ferner können automatisierte Verfahren durch den Server 2 für die Freigabe des aktualisierten Steuerungsmodells durchgeführt werden. Dies wird insbesondere gemäß besonderer gesetzlicher Vorgaben gestaltet.

In einem Schritt S11 empfängt das Fahrzeug 1 das aktualisierte Steuerungsmodelle und führt eine automatische Fahrt durch, wobei das aktualisierte Steuerungsmodell verwendet wird. Bei dem Ausführungsbeispiel ist vorgesehen, dass das aktualisierte Steuerungsmodell anstelle des alten Steuerungsmodells für das jeweils zugeordnete Modul für eine automatische Fahrfunktion genutzt wird. In weiteren Ausführungsbeispielen kann vorgesehen sein, dass eine Sicherheitskopie des alten Steuerungsmodells zurückgehalten wird, die im Falle einer nachteiligen Funktionsweise des aktualisierten Steuerungsmodells wieder verwendet werden kann.

Mit Bezug zu Figur 3 wird ein Beispiel für exploratives Erfassen von Sensordaten einer automatischen Fahrt erläutert. Dies betrifft insbesondere eine Lernphase, bei welcher das Fahrzeug 1 anhand des Erfassungsauftrags Sensordatensätze erfasst, anhand derer dann die Übertragungsdaten gebildet werden.

Figur 3 zeigt ein automatisch gesteuertes erstes Fahrzeug 10, das in dem gezeigten Fall einen Erfassungsauftrag empfangen hat und entsprechende Sensordatensätze erfasst. In Fahrtrichtung (dargestellt als Pfeil R) vor dem ersten Fahrzeug 10 befindet sich ein weiteres Fahrzeug 11, das überholt werden soll.

Bei der automatischen Durchführung des Überholmanövers wird eine Trajektorie bestimmt, entlang welcher sich das erste Fahrzeug 10 bewegen soll, um das weitere Fahrzeug 11 zu überholen. Ausführungsbeispiel wird dazu eine Vielzahl von potentiell befahrbaren Trajektorien 12a, 12b erzeugt, von denen beispielhaft zwei in der Figur dargestellt sind und die nachfolgend als Kandidaten 12a, 12b bezeichnet werden. In einem weiteren Schritt wird eine Bewertung der Kandidaten 12a, 12b vorgenommen, wobei unter anderem bestimmt wird, mit welcher Sicherheit sie befahren werden können, wie effizient die Fahrt entlang der Trajektorien durchgeführt werden kann und welche Zeit der Überholvorgang benötigen wird.

Bei einer explorativen Lernphase ist in dem Ausführungsbeispiel vorgesehen, dass nicht die als bevorzugt erkannte Trajektorie 12a, 12b verwendet wird, sondern eine andere Trajektorie 12a, 12b. Dabei wird sichergestellt, dass auch diese andere Trajektorie 12a, 12b sicher befahren werden kann, es kann jedoch ein Ausprobieren geringfügig abweichende Parameter durchgeführt werden, um anhand der beim Befahren dieser Trajektorien 12a, 12b erfassten Sensordatensätze ein Training des entsprechenden Steuerungsmodells dürfen zu können.

Dieses Verfahren kann insbesondere angewandt werden, um ein Lernen auf Planungsebene durchzuführen, das heißt auf einer Ebene zur Koordination mehrerer Module zur automatischen Steuerung der Fahrt.

In weiteren Ausführungsbeispielen können weitere Verfahren, insbesondere aus dem Bereich des Maschinenlernens, verwendet werden, um anhand des Erfassungsauftrags geeignete Sensordatensätze zu erfassen und/oder Übertragungsdaten zu erzeugen, wobei gegebenenfalls ein Training eines Steuerungsmodells bereits in einer mobilen Einheit 1 durchgeführt werden kann.

### Bezugszeichenliste

- 1: Mobile Einheit; Fahrzeug
- 2: Zentrale Steuerungseinheit; Server
- 3: Erfassungseinheit
- 3a, 3b, 3c, 3d: Sensoren
- 4: Recheneinheit
- 5: Fahrzeugschnittstelle
- 6: Serverschnittstelle
- 7: Aktualisierungseinheit
- 8: Verkehrsüberwachungseinrichtung
- 9a, 9b, 9c: Aktoren
- 10: Erstes Fahrzeug
- 11: Weiteres Fahrzeug
- 12a, 12b: Potentielle Trajektorien; Kandidaten
- R: Pfeil
- 21: Verfahrensschritte in mobiler Einheit
- 22: Verfahrensschritte in zentraler Steuerungseinheit
- S1: Automatische Fahrt
- S2: Detektion einer Schwäche
- S3: Erzeugen und Übertragen einer Bedarfsmeldung
- S4: Empfangen und Bewerten von Bedarfsmeldungen
- S5: Erzeugen und Übertragen eines Erfassungsauftrags
- S6: Empfangen des Erfassungsauftrags und Erfassung von Sensordatensätzen
- S7: Erzeugen und Übertragen von Übertragungsdaten
- S8: Empfangen der Übertragungsdaten
- S9: Erzeugen eines aktualisierten Steuerungsmodells
- S10: übertragen des aktualisierten Steuerungsmodells
- S11: Empfangen eines aktualisierten Steuerungsmodells und automatische Fahrt

## Patentansprüche

1. Verfahren zum Aktualisieren eines Steuerungsmodells für eine automatische Steuerung zumindest einer mobilen Einheit (1) mit automatischer Fahrfunktion, bei dem
eine zentrale Steuerungseinheit (2) einen Erfassungsauftrag erzeugt und an die mobile Einheit (1) überträgt; wobei
die mobile Einheit (1) Sensoren (3a; 3b, 3c; 3d) umfasst und der Erfassungsauftrag Bedingungen für die Erfassung von Sensordatensätzen mittels der Sensoren (3a; 3b, 3c; 3d) umfasst, wobei durch diese Bedingungen definiert wird, in welchen Fahrsituationen welche Arten von Sensordaten erfasst werden sollen;
die mobile Einheit (1) mittels der Sensoren (3a; 3b, 3c; 3d) anhand des Erfassungsauftrags die Sensordatensätze erfasst, anhand der erfassten Sensordatensätze Übertragungsdaten erzeugt, und die Übertragungsdaten an die zentrale Steuerungseinheit (2) überträgt; und
die zentrale Steuerungseinheit (2) die Übertragungsdaten empfängt, und anhand der empfangenen Übertragungsdaten ein aktualisiertes Steuerungsmodell zur automatischen Steuerung der mobilen Einheit (1) erzeugt,
wobei in einer explorativen Lernphase eine Vielzahl von Kandidaten für Trajektorien (12a, 12b) zur automatischen Steuerung der mobilen Einheit (1) erzeugt wird, und eine als sicher befahrbare und nicht präferiert bestimmte Trajektorie (12a, 12b) befahren wird, wobei die nicht präferierte Trajektorie (12a, 12b) anhand der bei der Ausführung erfassten Sensordatensätzen neu bewertet wird, die auf diese Weise erzeugten neuen Bewertungsergebnisse an die zentrale Steuerungseinheit (2) übertragen werden und das Steuerungsmodell zur automatischen Fahrtplanung optimiert wird.

2. Verfahren gemäß Anspruch 1,
wobei von der zentralen Steuerungseinheit (2) eine Bedarfsmeldung empfangen wird und der Erfassungsauftrag anhand der Bedarfsmeldung erzeugt wird.

3. Verfahren gemäß Anspruch 2,
wobei die Bedarfsmeldung durch die mobile Einheit (1) erzeugt wird.

4. Verfahren gemäß Anspruch 2 oder 3,
wobei die Bedarfsmeldung durch eine Verkehrsüberwachungseinrichtung (8) erzeugt wird.

5. Verfahren gemäß einem der Ansprüche 2 bis 4,
wobei die zentrale Steuerungseinheit (2) eine Vielzahl von Bedarfsmeldungen empfängt, eine Gewichtung der Bedarfsmeldungen ausführt und den Erfassungsauftrag anhand der gewichteten Bedarfsmeldungen erzeugt.

6. Verfahren gemäß einem der vorhergehenden Ansprüche,
wobei die Bedingungen des Erfassungsauftrags für die Erfassung von Sensordatensätzen Daten über Verkehrssituationen umfassen.

7. Verfahren gemäß einem der vorhergehenden Ansprüche,
wobei die zentrale Steuerungseinheit (2) zur Erzeugung des aktualisierten Steuerungsmodells anhand der Übertragungsdaten ein Training für ein bisheriges Steuerungsmodell durchführt.

8. Verfahren gemäß Anspruch 7,
wobei zur Erzeugung der Übertragungsdaten durch die mobile Einheit (1) ein Training eines integrierten Steuerungsmodells durchgeführt wird.

9. Verfahren gemäß einem der vorhergehenden Ansprüche,
wobei das aktualisierte Steuerungsmodell an die mobile Einheit (1) übertragen wird; und eine automatische Steuerung der mobilen Einheit (1) anhand des aktualisierten Steuerungsmodells durchgeführt wird.

10. System zum Aktualisieren eines Steuerungsmodells für eine automatische Steuerung zumindest einer mobilen Einheit (1) mit automatischer Fahrfunktion, umfassend:
eine zentrale Steuerungseinheit (2), die ausgebildet ist, einen Erfassungsauftrag zu erzeugen und an die mobile Einheit (1) zu übertragen; wobei
die mobile Einheit (1) Sensoren (3a; 3b, 3c; 3d) umfasst und der Erfassungsauftrag Bedingungen für die Erfassung von Sensordatensätzen mittels der Sensoren (3a; 3b, 3c; 3d) umfasst; wobei
durch die Bedingungen definiert wird, in welchen Fahrsituationen welche Arten von Sensordaten erfasst werden sollen,
die Sensoren (3a; 3b, 3c; 3d) der mobilen Einheit (1) ausgebildet sind, anhand des Erfassungsauftrags die Sensordatensätze zu erfassen, anhand der erfassten Sensordatensätze Übertragungsdaten zu erzeugen, und die Übertragungsdaten an die zentrale Steuerungseinheit (2) zu übertragen; wobei
die zentrale Steuerungseinheit (2) ausgebildet ist, die Übertragungsdaten zu empfangen, und anhand der empfangenen Übertragungsdaten ein aktualisiertes Steuerungsmodell zur automatischen Steuerung der mobilen Einheit (1) zu erzeugen,
wobei das System ferner so eingerichtet ist, dass eine Vielzahl von Kandidaten für Trajektorien (12a, 12b) zur automatischen Steuerung erzeugt wird, und eine als sicher befahrbare und nicht präferiert bestimmte Trajektorie (12a, 12b) befahren wird, wobei die nicht präferierte Trajektorie (12a, 12b) anhand der bei der Ausführung erfassten Sensordatensätzen neu bewertet wird, die auf diese Weise erzeugten neuen Bewertungsergebnisse an die zentrale Steuerungseinheit (2) übertragen werden und das Steuerungsmodell zur automatischen Fahrtplanung optimiert wird.

## Claims

1. Method for updating a control model for automatically controlling at least one mobile unit (1) with an automatic driving function, in which
a central control unit (2) generates a capture task and transmits it to the mobile unit (1); wherein
the mobile unit (1) comprises sensors (3a; 3b; 3c; 3d) and the capture task comprises conditions for capturing sensor data sets by means of the sensors (3a; 3b; 3c; 3d), wherein these conditions define which types of sensor data are intended to be captured in which driving situations;
the mobile unit (1) captures the sensor data sets on the basis of the capture task by means of the sensors (3a; 3b; 3c; 3d), generates transmission data on the basis of the captured sensor data sets, and transmits the transmission data to the central control unit (2); and
the central control unit (2) receives the transmission data and, on the basis of the received transmission data, generates an updated control model for automatically controlling the mobile unit (1),
wherein, in an exploratory learning phase, a multiplicity of candidates for trajectories (12a, 12b) for automatically controlling the mobile unit (1) are generated, and a trajectory (12a, 12b) that is determined to be safe to use and is not preferred is used, wherein the trajectory (12a, 12b) that is not preferred is reassessed on the basis of the sensor data sets captured during execution, the new assessment results generated in this manner are transmitted to the central control unit (2), and the control model is optimized for automatic journey planning.

2. Method according to Claim 1,
wherein a requirement message is received by the central control unit (2) and the capture task is generated on the basis of the requirement message.

3. Method according to Claim 2,
wherein the requirement message is generated by the mobile unit (1).

4. Method according to Claim 2 or 3,
wherein the requirement message is generated by a traffic monitoring device (8).

5. Method according to one of Claims 2 to 4,
wherein the central control unit (2) receives a multiplicity of requirement messages, weights the requirement messages and generates the capture task on the basis of the weighted requirement messages.

6. Method according to one of the preceding claims,
wherein the conditions of the capture task for capturing sensor data sets comprise data relating to traffic situations.

7. Method according to one of the preceding claims,
wherein the central control unit (2) carries out training for a previous control model in order to generate the updated control model on the basis of the transmission data.

8. Method according to Claim 7,
wherein an integrated control model is trained in order to generate the transmission data by means of the mobile unit (1).

9. Method according to one of the preceding claims,
wherein the updated control model is transmitted to the mobile unit (1); and the mobile unit (1) is automatically controlled on the basis of the updated control model.

10. System for updating a control model for automatically controlling at least one mobile unit (1) with an automatic driving function, comprising:
a central control unit (2) which is designed to generate a capture task and transmit it to the mobile unit (1); wherein
the mobile unit (1) comprises sensors (3a; 3b; 3c; 3d) and the capture task comprises conditions for capturing sensor data sets by means of the sensors (3a; 3b; 3c; 3d); wherein
the conditions define which types of sensor data are intended to be captured in which driving situations,
the sensors (3a; 3b; 3c; 3d) of the mobile unit (1) are designed to capture the sensor data sets on the basis of the capture task, to generate transmission data on the basis of the captured sensor data sets, and to transmit the transmission data to the central control unit (2); wherein
the central control unit (2) is designed to receive the transmission data and, on the basis of the received transmission data, to generate an updated control model for automatically controlling the mobile unit (1),
wherein the system is also configured such that a multiplicity of candidates for trajectories (12a, 12b) for automatic control are generated, and a trajectory (12a, 12b) that is determined to be safe to use and is not preferred is used, wherein the trajectory (12a, 12b) that is not preferred is reassessed on the basis of the sensor data sets captured during execution, the new assessment results generated in this manner are transmitted to the central control unit (2), and the control model is optimized for automatic journey planning.

## Revendications

1. Procédé permettant de mettre à jour un modèle de commande pour une commande automatique d'au moins une unité mobile (1) à fonction de conduite automatique, dans lequel
une unité de commande centrale (2) génère un ordre de détection et le transmet à l'unité mobile (1) ; dans lequel
l'unité mobile (1) comprend des capteurs (3a ; 3b, 3c ; 3d), et l'ordre de détection comprend des conditions pour la détection de jeux de données de capteur au moyen des capteurs (3a ; 3b, 3c ; 3d), dans lequel ces conditions définissent quel type de données de capteur est à détecter dans quelles situations de conduite ;
l'unité mobile (1) détecte au moyen des capteurs (3a ; 3b, 3c ; 3d) à l'aide de l'ordre de détection les jeux de données de capteur, génère des données de transmission à l'aide des jeux de données de capteur, et transmet les données de transmission à l'unité de commande centrale (2) ; et
l'unité de commande centrale (2) reçoit les données de transmission, et génère à l'aide des données de transmission reçues un modèle de commande mis à jour pour la commande automatique de l'unité mobile (1),
dans lequel une pluralité de candidats de trajectoires (12a, 12b) est générée dans une phase d'apprentissage exploratoire pour la commande automatique de l'unité mobile (1), et une trajectoire (12a, 12b) déterminée comme praticable en sécurité et non préférée est parcourue, dans lequel la trajectoire non préférée (12a, 12b) est réévaluée à l'aide des jeux de données de capteur détectés lors de l'exécution, les nouveaux résultats d'évaluation générés de cette manière sont transmis à l'unité de commande centrale (2), et le modèle de commande est optimisé pour la planification de trajet automatique.

2. Procédé selon la revendication 1, dans lequel l'unité de commande centrale (2) reçoit un message de besoin, et génère l'ordre de détection à l'aide du message de besoin.

3. Procédé selon la revendication 2, dans lequel le message de besoin est généré par l'unité mobile (1).

4. Procédé selon la revendication 2 ou 3, dans lequel le message de besoin est généré par un dispositif de surveillance de trafic (8).

5. Procédé selon l'une quelconque des revendications 2 à 4, dans lequel l'unité de commande centrale (2) reçoit une pluralité de messages de besoin, effectue une pondération des messages de besoin et génère l'ordre de détection à l'aide des messages de besoin pondérés.

6. Procédé selon l'une quelconque des revendications précédentes, dans lequel les conditions de l'ordre de détection pour la détection de jeux de données de capteur comprennent des données concernant des situations de trafic.

7. Procédé selon l'une quelconque des revendications précédentes, dans lequel l'unité de commande centrale (2) effectue à l'aide des données de transmission un entraînement pour un modèle de commande précédent afin de générer le modèle de commande mis à jour.

8. Procédé selon la revendication 7, dans lequel un entraînement d'un modèle de commande intégré est effectué par l'unité mobile (1) afin de générer les données de transmission.

9. Procédé selon l'une quelconque des revendications précédentes, dans lequel le modèle de commande mis à jour est transmis à l'unité mobile (1) ; et une commande automatique de l'unité mobile (1) est effectuée à l'aide du modèle de commande mis à jour.

10. Système permettant de mettre à jour un modèle de commande pour une commande automatique d'au moins une unité mobile (1) à commande de conduite automatique, comprenant :
une unité de commande centrale (2) qui est réalisée pour générer un ordre de détection et le transmettre à l'unité mobile (1) ; dans lequel
l'unité mobile (1) comprend des capteurs (3a ; 3b, 3c ; 3d) et l'ordre de détection comprend des conditions pour la détection de jeux de données de capteur au moyen des capteurs (3a ; 3b, 3c ; 3d) ; dans lequel
les conditions définissent quel type de données de capteur est à détecter dans quelles situations de conduite,
les capteurs (3a ; 3b, 3c ; 3d) de l'unité mobile (1) sont réalisés pour détecter les jeux de données de capteur à l'aide de l'ordre de détection, pour générer des données de transmission à l'aide des jeux de données de capteur détectés, et pour transmettre les données de transmission à l'unité de commande centrale (2) ; dans lequel
l'unité de commande centrale (2) est réalisée pour recevoir les données de transmission, et pour générer à l'aide des données de transmission reçues un modèle de commande mis à jour pour la commande automatique de l'unité mobile (1),
dans lequel le système est en outre agencé de telle sorte qu'une pluralité de candidats de trajectoires (12a, 12b) pour la commande automatique est générée, et une trajectoire (12a, 12b) déterminée comme praticable en sécurité et non préférée est parcourue, dans lequel la trajectoire non préférée (12a, 12b) est réévaluée à l'aide des jeux de données de capteur détectés lors de l'exécution, les nouveaux résultats d'évaluation ainsi générés sont transmis à l'unité de commande centrale (2), et le modèle de commande est optimisé pour la planification de trajet automatique.
